# EUROPÄISCHE PATENTANMELDUNG

(11) **EP 2 216 529 A1**
(43) Veröffentlichungstag der Anmeldung: **11.08.2010**
(21) Anmeldenummer: 09001717.9
(22) Anmeldetag: 06.02.2009
(51) Int. Cl.: F02C 7/232

(54) **Verfahren zum Spülen eines Abschnitts eines Brennstoffsystems einer Gasturbine**

(71) Anmelder: Siemens Aktiengesellschaft, 80333 München (DE)
(72) Erfinder: Wagner, Ulrich, 51766 Engelskirchen (DE)

(57) **Zusammenfassung**

Die Erfindung betrifft ein Brennstoffsystem eines Brenners einer Gasturbine sowie ein Verfahren zum Spülen eines Abschnitts eines Brennstoffsystems eines Brenners einer Gasturbine welches folgende Schritte umfasst: Vorsehen einer Zuführleitung (10) zum Zuführen von Brennstoff von einer Brennstoffquelle zu dem Brenner (12), Vorsehen eines ersten und eines zweiten Anschlusspunkts (30;18) an der Zuführleitung (10), Bereitstellen von Medium an dem ersten Anschlusspunkt (30) und Erzeugen von Unterdruck an dem zweiten Anschlusspunkt (18) zum Absaugen des sich im Abschnitt zwischen den beiden Anschlusspunkten (30;18) befindenden Brennstoffs durch den zweiten Anschlusspunkt (18).

## Beschreibung

Die Erfindung betrifft ein Verfahren zum Spülen eines Abschnitts eines Brennstoffsystems eines Brenners einer Gasturbine. Ferner betrifft die Erfindung ein Brennstoffsystem eines Brenners einer Gasturbine mit einer Zuführleitung zum Zuführen von Brennstoff von einer Brennstoffquelle zu dem Brenner.

Bei Gasturbinen mit Heizöl-Betrieb muss das Heizöl bzw. der flüssige Brennstoff nach dem Betrieb aus den Brennern und den daran angeschlossenen Versorgungsrohrleitungen entfernt werden, um ein Verkoken des Heizöls an deren heißen Oberflächen zu verhindern. Das Verkoken würde Leitungen und Brenner verstopfen und somit unbrauchbar machen. Beim Entfernen des Heizöls, dem so genannten Spülen der Zuführleitung zum Zuführen von Brennstoff, darf kein weiteres Heizöl in die Brennkammer des Brenners gelangen, weil dies zu Verpuffungen und weiteren Schäden führen könnte.

Aus EP 0 939 220 A1 ist ein Verfahren bekannt, bei dem die Brenner und Versorgungsleitungen von Gasturbinen gespült werden, um damit das Heizöl aus den Leitungen bzw. aus dem Brenner zu entfernen. Dazu wird Wasser über eine Wasserleitung einer NOx-Wasserversorgung (welche für den Heizöl/Wasser-Emulsionsbetrieb ohnehin vorhanden ist) in die Heizölleitung und anschließend in die Brennkammer gedrückt. Dadurch werden der Brenner und ein Leitungsstück von Heizöl entleert. In einem zweiten Schritt wird das Wasser der NOx-Wasserversorgung so in die Heizölleitung gedrückt, dass es das in der Heizölleitung befindliche Heizöl rückwärts in Richtung Heizölversorgung (Heizöl-Wassereinspritzpackage) drückt, von wo es über offene Ventile in eine Entleerung verbracht wird. Bei dem derartigen Spülverfahren und dem zugehörigen Brennstoffsystem kann es bei bestimmten Betriebsbedingungen zum Verbleib von Rückständen in der Heizölleitung kommen.

Es ist eine Aufgabe der Erfindung ein Verfahren zum Spülen eines Abschnitts eines Brennstoffsystems eines Brenners einer Gasturbine sowie ein zugehöriges Brennstoffsystem zu schaffen, bei dem die oben genannten Nachteile überwunden und insbesondere beim Spülen mit hoher Sicherheit kein weiterer Brennstoff in die Brennkammer des Brenners gelangt.

Die Aufgabe ist gemäß der Erfindung mit einem Verfahren zum Spülen eines Abschnitts eines Brennstoffsystems eines Brenners einer Gasturbine gemäß Anspruch 1 und einem Brennstoffsystem eines Brenners einer Gasturbine gemäß Anspruch 6 gelöst. Vorteilhafte Weiterbildungen der erfindungsgemäßen Lösung sind in den abhängigen Ansprüchen beschrieben.

Gemäß der Erfindung ist ein Verfahren zum Spülen eines Abschnitts eines Brennstoffsystems eines Brenners einer Gasturbine mit folgenden Schritten geschaffen: Vorsehen einer Zuführleitung zum Zuführen von Brennstoff von einer Brennstoffquelle zu dem Brenner, Vorsehen eines ersten und eines zweiten Anschlusspunkts an der Zuführleitung, Bereitstellen von Medium an dem ersten Anschlusspunkt und Erzeugen von Unterdruck an dem zweiten Anschlusspunkt zum Absaugen des sich im Abschnitt zwischen den beiden Anschlusspunkten befindenden Brennstoffs durch den zweiten Anschlusspunkt.

Das derartige Verfahren überwindet das eigentliche Problem bekannter Vorgehensweisen, welche nicht sicherstellen können, dass Heizöl beim Spülen in den bzw. die Brenner gedrückt wird. Das Problem wird überwunden, indem der Spüldruck im Brennersystem sicher unterhalb des Umgebungsdrucks und damit auch sicher unterhalb dem in der Brennerkammer eines zugeordneten Brenners vorherrschenden Druck liegt. Dies wird erreicht, indem an der Zuführleitung nahe dem Ablasssystem ein Unterdruck erzeugt wird. Der Unterdruck saugt das Medium am ersten Anschlusspunkt in die Zuführleitung und am zweiten Anschlusspunkt aus dieser heraus. Bei diesem Durchspülen der Zuführleitung wird auch jener Brennstoff in das Ablasssystem gesogen, der sich gegebenenfalls noch im Leitungsabschnitt zwischen der Brennkammer und dem zweiten Anschlusspunkt befindet.

Bei einer ersten, vorteilhaften Weiterbildung des erfindungsgemäßen Verfahrens werden der erste Anschlusspunkt brennerfern und der zweite Anschlusspunkt brennernah an der Zuführleitung vorgesehen. Mit diesem Vorgehen wird beim Spülen der Brennstoff über den längsten Abschnitt der Zuführleitung in Richtung des Brenners gefördert. Die Zuführleitung wird also in die gleiche Richtung durchspült, wie auch der Brennstoff in ihr fließt. Dies hat den Vorteil, dass z.B. konstruktiv zwingend vorzusehende Stöße und Verbindungsstellen in der Zuführleitung sauberer gespült werden. Selbstverständlich ist auch die Spülung der Zuführleitung in entgegengesetzter Richtung denkbar.

Bei einer zweiten, vorteilhaften Weiterbildung des erfindungsgemäßen Verfahrens wird der Unterdruck an dem zweiten Anschlusspunkt mit einer in einer Drainageleitung angeordneten Saug- bzw. Spülpumpe erzeugt. Da entsprechende Drainageleitungen bei bekannten Brennstoffsystemen ohnehin vorhanden sind, muss für diese Weiterbildung lediglich eine Pumpe in eine bestehende Leitung eingesetzt werden. Dies hat nicht nur bei neu zu erstellen Anlagen Kostenvorteile, sondern birgt auch den Vorteil, dass die Lösung selbst bei bestehenden Gasturbinen sehr einfach und kostengünstig integriert werden kann.

Bei einer dritten, vorteilhaften Weiterbildung des erfindungsgemäßen Verfahrens wird das Medium an dem ersten Anschlusspunkt mit einem Reservoir bereitgestellt, in dem der Druck des Mediums insbesondere auf Umgebungsdruck gehalten wird. Das derartige Reservoir kann kostengünstig nach Art einer Wanne oder eines (offenen) Tanks gestaltet sein und muss insbesondere keinerlei Druckabdichtung aufweisen. Das Reservoir sollte in einer Leitung angeordnet werden, die parallel zu einer Versorgungsleitung eines Wassereinspritzsystems mit darin angeordneter Einspritzpumpe verläuft. Das Reservoir ist dann zu der genannten Einspritzpumpe parallel geschaltet. Es kann so mit einem einfachen Umschaltventil wahlweise der Weg durch die Einspritzpumpe (zum Einspritzen von Medium, insbesondere Wasser, für den Heizöl/Wasser-Emulsionsbetrieb) oder der Weg durch das Reservoir (zum drucklosen Einspeisen von Medium während des Spülvorgangs) eingestellt werden.

Bei einer vierten, vorteilhaften Weiterbildung des erfindungsgemäßen Verfahrens wird aufgrund der oben genannten Vorteile als Medium Wasser verwendet. Wasser ist, wie erwähnt, bei Gasturbinen bereits in der dortigen NOx-Wasserversorgung vorhanden, mittels der im Betrieb der Gasturbine das Wasser in den Brenner eindosiert werden kann, um den Ausstoß von Stickoxiden zu verringern.

Die erfindungsgemäße Lösung sieht ferner ein Brennstoffsystem eines Brenners einer Gasturbine mit
- einer Zuführleitung zum Zuführen von Brennstoff von einer Brennstoffquelle zu dem Brenner,
- einem ersten und einem zweiten Anschlusspunkt an der Zuführleitung,
- einem Mittel zum Bereitstellen von Medium an dem ersten Anschlusspunkt sowie
- einem Mittel zum Erzeugen von Unterdruck an dem zweiten Anschlusspunkt und zum Absaugen des sich im Abschnitt zwischen den beiden Anschlusspunkten befindenden Brennstoffs durch den zweiten Anschlusspunkt
vor.

Bei einer ersten, vorteilhaften Weiterbildung des erfindungsgemäßen Brennstoffsystems sind der erste Anschlusspunkt brennerfern und der zweite Anschlüsspunkt brennernah an der Zuführleitung vorgesehen.

Bei einer zweiten, vorteilhaften Weiterbildung des erfindungsgemäßen Brennstoffsystems ist das Mittel zum Erzeugen von Unterdruck an dem zweiten Anschlusspunkt mit einer in einer Drainageleitung angeordneten Spülpumpe gestaltet.

Bei einer dritten, vorteilhaften Weiterbildung des erfindungsgemäßen Brennstoffsystems ist das Mittel zum Bereitstellen von Medium an dem ersten Anschlusspunkt mit einem Reservoir gestaltet, in dem der Druck des Mediums insbesondere auf Umgebungsdruck gehalten ist.

Bei einer vierten, vorteilhaften Weiterbildung des erfindungsgemäßen Brennstoffsystems ist das Medium mit Wasser gebildet.

Ferner ist bei dem erfindungsgemäßen Brennstoffsystem vorteilhaft am brennerfernen Anschlusspunkt ein Multifunktions-Stellorgan mit folgenden Schaltstellungen vorgesehen:
- Schaltstellung 1: Verbinden der Zufuhr von Medium mit dem brennernahen Anschlusspunkt, Verbinden der Zufuhr von Brennstoff mit dem brennerfernen Anschlusspunkt, Verschließen der Drainageleitung (normaler Brennbetrieb);
- Schaltstellung 2: Verbinden der Zufuhr von Medium mit dem brennerfernen Anschlusspunkt und Verbinden des brennernahen Anschlusspunktes mit der Drainageleitung (Spülen mit Unterdruck); und/oder
- Schaltstellung 3: Verschließen der Zufuhr von Medium zum brennernahen Anschlusspunkt, Verschließen der Zufuhr von Medium zum brennerfernen Anschlusspunkt, Verbinden der Zufuhr von Brennstoff mit der Drainageleitung (Abführen von Restbrennstoff).

Mit dem Multifunktionsventil kann im normalen Brennbetrieb vorteilhaft Medium über den brennernahen Anschlusspunkt unter Druck eingespeist werden. Ferner können über den brennernahen Anschlusspunkt gegebenenfalls die Düsen am Brenner in dessen Brennkammer hinein gespült werden. Ferner kann (wie oben erläutert) Medium über den brennerfernen Anschlusspunkt drucklos zugeführt und in die Drainage abgesaugt werden. Das derartige Multifunktions-Stellorgan kann als Einheit gefertigt und auch geprüft werden. Ferner ist es innerhalb des Brennstoffsystems mit nur einem Leitungsbündel anzusteuern, insgesamt also besonders kostengünstig. Seine Stellorgane sperren ferner während des normalen Betriebs des Brenners die Brennstoff-Zuführleitung gegenüber der Einspeisung von Fremdmedium ab,

Die erfindungsgemäße Lösung ermöglicht so insgesamt ein einfaches, kostengünstiges und zugleich besonders gut reinigendes Spülen der Zuführleitung für Brennstoff an einer Gasturbine.

Nachfolgend wird ein Ausführungsbeispiel der erfindungsgemäßen Lösung anhand der beigefügten schematischen Zeichnung näher erläutert. Es zeigt die Figur eine Prinzipskizze eines Ausführungsbeispiels eines Brennstoffsystems einer Gasturbine gemäß der Erfindung.

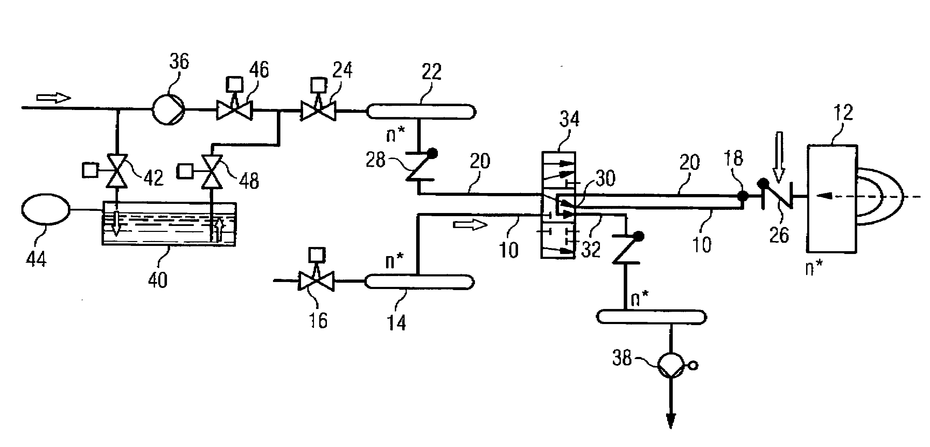

In der FIG 1 ist ein Brennstoffsystem mit einer Zuführleitung 10 zum Zuführen von Brennstoff bzw. Heizöl zu einem Brenner 12 dargestellt (wobei Brenner 12 in einer Anzahl n vorhanden sind). Der Brennstoff wird dabei in einen Heizöl-Flusssteller 14 mittels eines Stellorgans in Gestallt eines Stellventils 16 eingespeist, von dem aus er in die Zuführleitung 10 gelangt.

Nahe dem Brenner 12 ist in der Zuführleitung 10 ein T-Stück bzw. Anschlusspunkt 18 ausgebildet, an dem ein Medium durch eine Einspeiseleitung 20 in die Zuführleitung 10 eingespeist werden kann. Das Medium.ist Wasser, welches aus einem Wasserverteiler 22 einer NOx-Wasserversorgung mit einem in Strömungsrichtung davor angeordneten Stellventil 24 stammt. Dabei ist in der Zuführleitung 10 zwischen dem Anschlusspunkt 18 und dem Brenner 12 ein zum Brenner 12 hin öffnendes Rückschlagventil 26 und in der Einspeiseleitung 20 ein zum Anschlusspunkt 18 hin öffnendes Rückschlagventil 28 vorgesehen.

In Strömungsrichtung aufwärts vom Anschlusspunkt 18 ist in der Zuführleitung 10 ein weiterer Anschlusspunkt 30 angeordnet, an dem in die Zuführleitung 10 Wasser aus dem brennerfernen Abschnitt der Einspeiseleitung 20 eingespeist werden kann. Ferner kann an dem Anschlusspunkt 30 Wasser von dem brennernahen Abschnitt der Einspeiseleitung 20 in eine Drainage- bzw. Abführleitung 32 abgeführt werden. Der Anschlusspunkt 30 ist dabei mit einem Multifunktions-Stellorgan 34 gestaltet, welches dazu zwischen zwei Stellungen umschaltet, insgesamt aber sogar drei Stellungen einnehmen kann.

Beim normalen Betrieb des derartigen Brennstoffsystems einer Gasturbine befindet sich das Multifunktions-Stellorgan 34 in seiner bezogen auf die FIG untersten Stellung, in der es die Einspeiseleitung 20 sowie die Zuführleitung 10 durchgängig herstellt und auf diese Weise dafür sorgt, dass am Brenner 12 sowohl Brennstoff als auch Wasser eingespritzt wird. Dabei wird das Wasser aus der NOx-Wasserversorgung mittels einer in Strömungsrichtung hinter dem Stellventil 24 angeordneten Einspritzpumpe 36 über die Einspeiseleitung 20 in den Brenner 12 gedrückt.

Nach dem Abschalten des Brennstoffsystems wird zunächst der Brennstoff in die Brennkammer gespült, der sich zwischen dem Anschlusspunkt 18 und dem Brenner 12 befindet. Dies wird durch Zufuhr von Wasser über die Einspeiseleitung 20 erreicht.

Zum Spülen der Leitungen des derartigen Brennstoffsystems einer Gasturbine, d.h. der Zuführleitung 10, schaltet das Multifunktions-Stellorgan 34 in die in der FIG dargestellte Stellung, in der es am Anschlusspunkt 30 den brennerfernen Abschnitt der Einspeiseleitung mit der zuführleitung 10 verbindet und ferner eine Verbindung zwischen dem brennernahen Abschnitt der Einspeiseleitung 20 und der Drainageleitung 32 herstellt.

Nach dem derartigen Umschalten des Multifunktions-Stellorgans 34 wird mit einer in der Drainageleitung 32 angeordneten Saug- bzw. Spülpumpe 38 Brennstoff aus der Drainageleitung 32 abgesaugt und dadurch jener Brennstoff nachgesaugt, der sich in dem brennernahen Abschnitt der Zuführleitung 10 befindet. Zugleich wird Wasser aus dem brennerfernen Abschnitt der Einspeiseleitung 20 in diesen Abschnitt der Zuführleitung 10 nachgesaugt. Das Wasser spült dabei die Zuführleitung 10 in derselben Strömungsrichtung, wie zuvor im normalen Betrieb der Brennstoff in dieser Leitung geflossen ist.

Damit im brennerfernen Abschnitt der Einspeiseleitung 20 das Wasser stets allenfalls mit Umgebungsdruck nachfließt und nicht etwa von der Einspritzpumpe 36 in die Zuführleitung 10 und dadurch gegebenenfalls sogar in den Brenner 12 gedrückt wird, ist ein sich unter Umgebungsdruck befindendes Reservoir 40 parallel zur Einspritzpumpe 36 geschaltet.

Das zum Spülen vorgesehene Wasser wird also in dem Reservoir 40 unter Umgebungsdruck gehalten. Durch ein Füllventil 42, das über eine Niveaumessung 44 gesteuert wird, wird gewährleistet, dass Wasser aus einem (weiter nicht veranschaulichten) Vorsystem mit einer dortigen Fördereinrichtung in ausreichender Menge im Reservoir 40 bereitsteht. Für den Spülvorgang wird die Einspritzpumpe 36 dann abgestellt, ein in Strömungsrichtung dahinter angeordnetes Stoppventil 46 geschlossen, ein aus dem Reservoir 40 herausführendes Stellventil 48 geöffnet und die Spülpumpe 38 gestartet. Daraufhin fließt das Wasser mit einem niedrigeren als dem Umgebungsdruck vom Reservoir 40 durch das Multifunktions-Stellorgan 34 in die Zuführleitung 10. Das Wasser verdrängt dort das Heizöl bzw. den Brennstoff und gelangt in die Drainageleitung 32, ohne dass Brennstoff oder Wasser in den Brenner 12 hineindrückt werden könnte.

Die Erfindung erlaubt ein vollständiges Spülen der Zuführleitung(en) 10 in der normalen Heizöl-Strömungsrichtung. Weitere Vorteile sind ein sicheres Entfernen des Heizöls aus den Heizölleitungen auch bei geringem oder fehlendem Brennkammerdruck.

## Patentansprüche

1. Verfahren zum Spülen eines Abschnitts eines Brennstoffsystems eines Brenners einer Gasturbine mit den Schritten:
Vorsehen einer Zuführleitung (10) zum Zuführen von Brennstoff von einer Brennstoffquelle zu dem Brenner (12),
Vorsehen eines ersten und eines zweiten Anschlusspunkts (30; 18) an der Zuführleitung (10),
Bereitstellen von Medium an dem ersten Anschlusspunkt (30) und
Erzeugen von Unterdruck an dem zweiten Anschlusspunkt (18) zum Absaugen des sich im Abschnitt zwischen den beiden Anschlusspunkten (30; 18) befindenden Brennstoffs durch den zweiten Anschlusspunkt (18).

2. Verfahren nach Anspruch 1,
bei dem der erste Anschlusspunkt (30) brennerfern und der zweite Anschlusspunkt (18) brennernah an der Zuführleitung (10) vorgesehen werden.

3. Verfahren nach Anspruch 1 oder 2,
bei dem der Unterdruck an dem zweiten Anschlusspunkt (18) mit einer in einer Drainageleitung (32) angeordneten Spülpumpe (38) erzeugt wird.

4. Verfahren nach einem der Ansprüche 1 bis 3,
bei dem das Medium an dem ersten Anschlusspunkt (30) mit einem Reservoir (40) bereitgestellt wird, in dem der Druck des Mediums insbesondere auf Umgebungsdruck gehalten wird.

5. Verfahren nach einem der Ansprüche 1 bis 4,
bei dem als Medium Wasser verwendet wird.

6. Brennstoffsystem eines Brenners einer Gasturbine mit einer Zuführleitung (10) zum Zuführen von Brennstoff von einer Brennstoffquelle zu dem Brenner (12),
einem ersten und einem zweiten Anschlusspunkt (30; 18) an der Zuführleitung (10),
einem Mittel (40) zum Bereitstellen von Medium an dem ersten Anschlusspunkt (30) und
einem Mittel (38) zum Erzeugen von Unterdruck an dem zweiten Anschlusspunkt (18) und zum Absaugen des sich im Abschnitt zwischen den beiden Anschlusspunkten (30; 18) befindenden Brennstoffs durch den zweiten Anschlusspunkt (18).

7. Brennstoffsystem nach Anspruch 6,
bei dem der erste Anschlusspunkt (30) brennerfern und der zweite Anschlusspunkt (18) brennernah an der Zuführleitung (10) vorgesehen sind.

8. Brennstoffsystem nach Anspruch 6 oder 7,
bei dem das Mittel zum Erzeugen von Unterdruck an dem zweiten Anschlusspunkt (18) mit einer in einer Drainageleitung (32) angeordneten Spülpumpe (38) gestaltet ist.

9. Brennstoffsystem nach einem der Ansprüche 6 bis 8,
bei dem das Mittel zum Bereitstellen von Medium an dem ersten Anschlusspunkt (30) mit einem Reservoir (40) gestaltet ist, in dem der Druck des Mediums insbesondere auf Umgebungsdruck gehalten ist.

10. Brennstoffsystem nach einem der Ansprüche 6 bis 9,
bei dem das Medium mit Wasser gebildet ist.
